Europäisches Patentamt

European Patent Office

Office européen des brevets

(11) Veröffentlichungsnummer: **0 184 003 B1**

(12) **EUROPÄISCHE PATENTSCHRIFT**

(45) Veröffentlichungstag der Patentschrift: **15.01.92**

(51) Int. Cl.⁵: **G02F 1/133**

(21) Anmeldenummer: **85114038.4**

(22) Anmeldetag: **05.11.85**

(54) **Flüssigkristallzelle.**

(30) Priorität: **06.12.84 DE 3444525**

(43) Veröffentlichungstag der Anmeldung:
**11.06.86 Patentblatt 86/24**

(45) Bekanntmachung des Hinweises auf die
Patenterteilung:
**15.01.92 Patentblatt 92/03**

(84) Benannte Vertragsstaaten:
**CH DE FR GB IT LI NL SE**

(56) Entgegenhaltungen:
**EP-A- 0 152 827**
**AT-B- 356 190**
**DE-B- 2 452 782**
**GB-A- 2 064 805**
**US-A- 3 728 007**

(73) Patentinhaber: **VDO Adolf Schindling AG**
**Gräfstrasse 103**
**W-6000 Frankfurt/Main 90(DE)**

(72) Erfinder: **Baeger, Holm, Dr. Dipl.-Phys.**
**Salzbornstrasse 1**
**W-6231 Schwalbach a.Ts.(DE)**

(74) Vertreter: **Klein, Thomas, Dipl.-Ing. (FH)**
**Sodener Strasse 9 Postfach 6140**
**W-6231 Schwalbach a. Ts.(DE)**

**Beschreibung**

Die Erfindung betrifft eine Flüssigkristallzelle, insbesondere TN-Zelle mit Zwei im Abstand zueinander angeordneten und zwischen sich einen mit Flüssigkristallsubstanz gefüllten Zellenraum bildenden transparenten Substraten, auf deren einander abgewandten Seiten Polarisatoren und auf deren einander zugewandten Seiten Elektroden angeordnet sind.

Bei derartigen Flüssigkristallanzeigen besteht das Problem die beiden Substrate mit möglichst geringen Toleranzabweichungen in ihrem Abstand zueinander anzuordnen. Abweichungen in diesem Abstand, durch den die Flüssigkristallschicht bestimmt wird, führen zu einem farbigen Erscheinungsbild der Anzeige. Insbesondere bei großflächigen Anzeigen ist es schwierig einen gleichmäßigen Abstand über die gesamte Fläche zu erreichen.

Darüber hinaus muß der Abstand auch eine bestimmte Größe besitzen, um eine bestimmte Farbe der Anzeige zu erhalten.

Diese Farbprobleme machen sich insbesondere auch dann negativ bemerkbar, wenn z.B. durch Farbhinterlegung an bestimmten Stellen der Anzeige farbige Zeichen und Symbole angezeigt werden sollen, da es leicht zu verfälschenden Farbmischungen kommen kann.

Aufgabe der Erfindung ist es daher, eine Flüssigkristallzelle nach dem Oberbegriff zu schaffen, die bei einfachem, leicht herstellbarem Aufbau eine gleichmäßige Farbe der Anzeige ermöglicht.

Diese Aufgabe wird erfindungsgemäß dadurch gelöst, daß eine substratseitige Grenzfläche des Zellenraums, an die die Flüssigkristallsubstanz angrenzt, mit einer Vielzahl Vertiefungen ausgebildet ist, die im wesentlichen aneinander angrenzend die gesamte Grenzfläche überdecken, mit unterschiedlichen Tiefen an den über die Flächenerstreckung jeder Vertiefung verteilten Stellen, wobei diese Tiefen entsprechend den jeweils an diesen Stellen vorhandenen Gesamtdicken der Flüssigkristallschicht Lichtfärbungen bewirken und die Lichtfärbungen im Bereich der Flächenerstreckung einer Vertiefung zumindest weitgehend das gesamte Farbspektrum aufweisen. Da jede Vertiefung weitgehend das ganze Farbspektrum aufweist, ist für einen Beobachter sowohl der Bereich jeder Vertiefung als auch die gesamte Anzeigefläche durch additive Farbmischung in einer einzigen Farbe wahrnehmbar. Durch die geringe Größe der Vertiefungen erscheinen diese nicht einzeln sichtbar.

Die Wandflächen einer Vertiefung weisen über die Flächenerstreckung der Vertiefung eine unterschiedliche Neigung zur Anzeigeebene auf, wodurch auch die einzelnen, daran anliegenden Flüssigkristallmoleküle eine Ausgangslage unterschiedlicher Neigung besitzen. Dies führt zu einer unterschiedlichen Kippcharakteristik dieser Flüssigkristallmoleküle, wodurch die Ablesbarkeit der Anzeige aus allen Blickwinkeln erheblich verbessert wird.

Die Schaltzeiten bei Flüssigkristallanzeigen sind abhängig von der Dicke der Flüssigkristallschicht, wobei grosse Dicken ein nur träges Schalten und geringe Dicken aber ein schnelles Schalten ermöglichen. Geringe Flüssigkristallschichten haben aber verstärkt das Problem der insbesondere ungleichmäßigen Verfärbung. Da durch die erfindungsgemäße Ausgestaltung das Verfärbungsproblem eliminiert ist, können nunmehr ohne Schwierigkeiten Flüssigkristallanzeigen mit geringer Flüssigkristallschichtdicke und damit mit geringen Schaltzeiten hergestellt werden.

Die Elimination der Verfärbungsprobleme vereinfacht es nun auch flexible Anzeigen herzustellen.

Darüber hinaus können Temperaturänderungen im Gegensatz zu herkömmlichen Anzeigen nicht mehr zu Änderungen der neutralen Färbung der Anzeige führen.

Einfach herstellbar ist es, wenn die Vertiefungen an der Zellenraumseite des Substrats ausgebildet und von den Elektroden zumindest teilweise überdeckt sind, da in diesem Stadium die weiteren dünnen Schichten noch nicht auf das Substrat aufgebracht sind und beschädigt werden können. Dies trifft insbesondere für die teilweise sehr feinen Strukturen der Elektroden zu, die sehr empfindlich sind. Da die anschließend aufgebrachten Schichten sehr dünn sind, bleibt die Struktur der Vertiefungen bis zur Grenzfläche, an der die Flüssigkristallsubstanz angrenzt, erhalten.

Die Vertiefungen können z.B. durch einen Ätzvorgang oder einen Prägevorgang hergestellt sein.

Eine weitere, ebenfalls vorteilhafte Möglichkeit besteht darin, daß auf die Zellenraumseite des Substrats eine transparente Schicht aufgebracht ist, deren zellenraumseitige Oberfläche eine die Vertiefungen bildende Rauigkeit besitzt. Dabei ist es auch möglich, daß die transparente Schicht die Elektroden überdeckend aufgebracht ist.

Die Flächenerstreckung einer Vertiefung kann eine solche Größe aufweisen, daß deren Lichtfärbungen als neutrale additive Farbmischung erscheinen, wobei die Farbmischung vorzugsweise grau ist.

Es können entweder eine oder auch beide substratseitigen Grenzflächen des Zellenraums mit einer Vielzahl Vertiefungen ausgebildet sein.

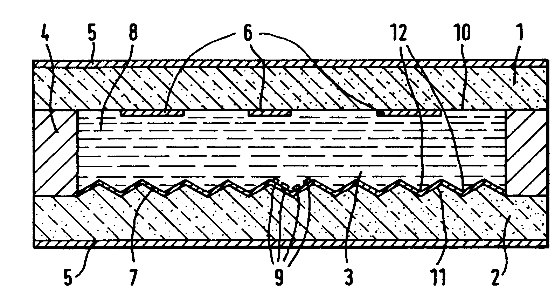

Ein Ausführungsbeispiel der Erfindung ist in der Zeichnung dargestellt und wird im folgenden näher beschrieben. Die einzige Figur der Zeichnung zeigt eine Flüssigkristallzelle im Querschnitt.

Die dargestellte Flüssigkristall-Drehzelle besteht aus zwei im Abstand zueinander angeordneten transparenten Substraten 1 und 2, die zwischen sich einen Zellenraum 3 bilden. Der Zellenraum 3 ist an seinen Seiten umlaufend durch einen Verschluß 4 geschlossen. Auf den einander abgewandten Seiten sind auf den Substraten 1 und 2 Polarisatoren 5 angeordnet.

Auf der zellenraumseitigen Fläche 10 des Substrats 1 sind Zeichenelektroden 6 und auf der zellenraumseitigen Fläche 11 des Substrats 2 ist eine Flächenelektrode 7 angeordnet.

Der Zellenraum 3 ist mit Flüssigkristallsubstanz 8 gefüllt, von der vier Flüssigkristallmoleküle 9 an der Flächenelektrode 7 anliegend dargestellt sind.

Die Fläche 11 des Substrats 2 ist vollständig mit Vertiefungen ausgebildet.

Da die Flächenelektrode 7 sehr dünn ist, sind an ihrer freien Oberfläche, die die Grenzfläche zur Flüssigkristallsubstanz 8 bildet, die gleichen Vertiefungen 12 vorhanden.

Über ihre Flächenerstreckung besitzt jede Vertiefung 12 Stellen unterschiedlicher Tiefe. Dabei ist die geringste Tiefe am Randbereich und die größte Tiefe im mittleren Bereich der Vertiefung 12. Diese unterschiedlichen Tiefen führen dazu, daß an jeder der Stellen der Vertiefung 12 eine unterschiedlich dicke Flüssigkristall-Substanzschicht vorhanden ist. An jeder Stelle wird entsprechend der jeweiligen Dicke der Flüssigkristall-Substanzschicht eine bestimmte Lichtfärbung bewirkt, wobei die verschiedenen Tiefen so gewählt sind, daß innerhalb einer Vertiefung 12 zumindest weitgehend das gesamte Farbspektrum vorhanden ist.

Aufgrund der geringen Größe sind für einen Beobachter aber nicht die Lichtfärbungen einzeln sondern als neutrale additive Farbmischung grauer Färbung wahrnehmbar. Dies ist bei allen Vertiefungen 12 der Fall, so daß die gesamte Anzeige gleichmäßig grau erscheint.

Da das gesamte farbspektrum innerhalb einer Vertiefung 12 unabhängig von Schwankungen der Gesamtdicke der Flüssigkristall-Substanzschicht immer bestehen bleibt, kann es nicht zu Farbänderungen kommen.

**Patentansprüche**

1. Flüssigkristallzelle, insbesondere TN-Zelle , mit zwei im Abstand zueinander angeordneten und zwischen sich einen mit Flüssigkristallsubstanz gefüllten Zellenraum bildenden transparenten Substraten, auf deren einander abgewandten Seiten Polarisatoren und auf deren einander zugewandten Seiten Elektroden angeordnet sind, dadurch gekennzeichnet, daß eine substratseitige Grenzfläche des Zellenraums (3), an die die Flüssigkristallsubstanz (8) angrenzt, mit einer Vielzahl Vertiefungen (12) ausgebildet ist, die im wesentlichen aneinander angrenzend die gesamte Grenzfläche überdecken, mit unterschiedlichen Tiefen an den über die Flächenerstreckung jeder Vertiefung (12) verteilten Stellen, wobei diese Tiefen entsprechend den jeweils an diesen Stellen vorhandenen Gesamtdicken der Flüssigkristallschicht Lichtfärbungen bewirken und die Lichtfärbungen im Bereich der Flächenerstreckung einer Vertiefung (12) zumindest weitgehend das gesamte Farbspektrum aufweisen.

2. Flüssigkristallzelle nach Anspruch 1, dadurch gekennzeichnet, daß die Vertiefungen (12) an der Zellenraumseite des Substrats (2) ausgebildet und von den Elektroden (7) zumindest teilweise überdeckt sind.

3. Flüssigkristallzelle nach Anspruch 2, dadurch gekennzeichnet, daß die Vertiefungen durch einen Ätzvorgang hergestellt sind.

4. Flüssigkristallzelle nach Anspruch 2, dadurch gekennzeichnet, daß die Vertiefungen durch einen Prägevorgang hergestellt sind.

5. Flüssigkristallzelle nach Anspruch 1, dadurch gekennzeichnet, daß auf die Zellenraumseite des Substrats eine transparente Schicht aufgebracht ist, deren zellenraumseitige Oberfläche eine die Vertiefungen bildende Rauigkeit besitzt.

6. Flüssigkristallzelle nach Anspruch 5, dadurch gekennzeichnet, daß die transparente Schicht die Elektroden überdeckend aufgebracht ist.

7. Flüssigkristallzelle nach einem der vorhergehenden Ansprüche, dadurch gekennzeichnet, daß die Flächenerstreckung einer Vertiefung (12) eine solche Größe aufweist, daß deren Lichtfärbungen als neutrale additive Farbmischung erscheinen.

8. Flüssigkristallzelle nach Anspruch 7, dadurch gekennzeichnet, daß die Farbmischung grau ist.

9. Flüssigkristallzelle nach einem der vorhergehenden Ansprüche, dadurch gekennzeichnet, daß beide substratseitigen Grenzflächen des Zellenraums mit einer Vielzahl Vertiefungen ausgebildet sind.

**Claims**

1. Liquid-crystal cell, in particular a TN cell, having two transparent substrates which are arranged at a distance from one another and which form, between themselves, a cell cavity which is filled with liquid-crystal substance and on whose sides facing away from one another polarisers are arranged and on whose sides facing one another electrodes are arranged, characterised in that a substrate-side interface of the cell cavity (3), which is in contact with the liquid-crystal substance (6), is formed with a multiplicity of recesses (12) which are essentially in contact with one another, cover the entire interface and have various depths at the points distributed over the area extension of each recess (12), these depths causing light colours corresponding to the total thicknesses of the liquid-crystal layer present at each of these points, and the light colours having, at least substantially, the entire colour spectrum in the region of the area extension of a recess (12).

2. Liquid-crystal cell according to Claim 1, characterised in that the recesses (12) are formed on the cell cavity side of the substrate (2) and are at least partially covered by the electrodes (7).

3. Liquid-crystal cell according to Claim 2, characterised in that the recesses are produced by etching.

4. Liquid-crystal cell according to Claim 2, characterised in that the recesses are produced by embossing.

5. Liquid-crystal cell according to Claim 1, characterised in that a transparent coating is applied to the cell cavity side of the substrate with a surface on the cell cavity side which has a roughness which forms the recesses.

6. Liquid-crystal cell according to Claim 5, characterised in that the transparent coating is applied to cover the electrodes.

7. Liquid-crystal cell according to one of the preceding claims, characterised in that the area extension of a recess (12) has such a magnitude that its light colours appear to be a neutral additive colour mixture.

8. Liquid-crystal cell according to Claim 7, characterised in that the colour mixture is grey.

9. Liquid-crystal cell according to one of the preceding claims, characterised in that the two substrate-side interfaces of the cell cavity are formed with a multiplicity of recesses.

**Revendications**

1. Cellule à cristaux liquides, en particulier cellule de type TN, comportant deux substrats transparents, disposés à une certaine distance l'un de l'autre et délimitant entre eux un espace (intérieur) de cellule empli de la substance à propriétés de cristaux liquides, substrats sur les côtés ou faces éloignées l'une de l'autre duquel sont disposés des polarisateurs et, sur les faces tournées l'une vers l'autre sont disposées les électrodes, cellule caractérisée en ce qu'une surface limite, côté substrat, de l'espace (3) intérieur de la cellule adjacent à la substance (8) à propriétés de cristaux liquides, comporte un grand nombre de creux (12), qui, en étant essentiellement adjacents l'un de l'autre, recouvrent la totalité de la surface limite, la cellule comportant, en des endroits répartis sur la totalité de la surface de chaque creux (12) des profondeurs différentes qui, selon l'épaisseur totale de la couche de matière à propriétés de cristaux liquides présente en l'endroit en cause, provoquent des colorations de la lumière et en ce que les colorations de la lumière présentent, dans la zone de l'étendue de surface d'un creux (12), au moins dans une large mesure la totalité du spectre des couleurs.

2. Cellule à cristaux liquides selon la revendication 1, caractérisée en ce que les creux (12) sont formés sur le côté ou la face du substrat (2) tourné(e) vers l'espace intérieur de la cellule et sont recouverts au moins partiellement par les électrodes (7).

3. Cellule à cristaux liquides selon la revendication 2, caractérisée en ce que les creux ont été produits par un processus de gravure ou d'attaque chimique.

4. Cellule à cristaux liquides selon la revendication 2, caractérisée en ce que les creux ont été produits par un processus de gaufrage.

5. Cellule à cristaux liquides selon la revendication 1, caractérisée en ce que, sur le côté du substrat tourné vers l'espace intérieur de la cellule a été appliquée une couche transparente dont la surface, côté espace intérieur de cellule, possède une rugosité formant les creux.

6. Cellule à cristaux liquides selon la revendication 5, caractérisée en ce que la couche transparente a été appliquée de manière à recouvrir les électrodes.

**7.** Cellule à cristaux liquides selon l'une des revendications précédentes, caractérisée en ce que l'étendue de la surface d'un creux (12) a une grandeur telle que ses colorations de lumière semblent former un mélange de couleurs, neutre par addition.

**8.** Cellule à cristaux liquides selon la revendication 7, caractérisée en ce que le mélange des couleurs est gris.

**9.** Cellule à cristaux liquides selon l'une des revendications précédentes, caractérisée en ce que les deux surfaces limites, côté substrat, de l'espace intérieur de la cellule comportent un grand nombre de creux.